(19) Europäisches Patentamt / European Patent Office / Office européen des brevets

(11) **EP 2 441 207 B1**

(12) **FASCICULE DE BREVET EUROPEEN**

(45) Date de publication et mention
de la délivrance du brevet:
**03.06.2020 Bulletin 2020/23**

(21) Numéro de dépôt: **10737992.7**

(22) Date de dépôt: **11.06.2010**

(51) Int Cl.:
***H04L 9/32*** *(2006.01)*

(86) Numéro de dépôt international:
**PCT/FR2010/051167**

(87) Numéro de publication internationale:
**WO 2010/142923 (16.12.2010 Gazette 2010/50)**

(54) **PROCÉDÉ CRYPTOGRAPHIQUE D'AUTHENTIFICATION ANONYME ET D'IDENTIFICATION SÉPARÉE D'UN UTILISATEUR**

KRYPTOGRAFISCHES VERFAHREN FÜR ANONYME AUTHENTIFIZIERUNG UND SEPARATE IDENTIFIZIERUNG EINES BENUTZERS

CRYPTOGRAPHIC METHOD FOR ANONYMOUS AUTHENTICATION AND SEPARATE IDENTIFICATION OF A USER

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **12.06.2009 FR 0953953**

(43) Date de publication de la demande:
**18.04.2012 Bulletin 2012/16**

(73) Titulaire: **Orange**
**75015 Paris (FR)**

(72) Inventeurs:
• **CANARD, Sébastien**
**F-14000 Caen (FR)**
• **JAMBERT, Amandine**
**F-14000 Caen (FR)**
• **MALVILLE, Eric**
**F-35760 Saint Grégoire (FR)**

(74) Mandataire: **Plasseraud IP**
**66, rue de la Chaussée d'Antin**
**75440 Paris Cedex 09 (FR)**

(56) Documents cités:
**EP-A2- 1 808 795   WO-A2-2008/149029**

• **SEBASTIEN CANARD ET AL: "Trapdoor Sanitizable Signatures and Their Application to Content Protection" 5 juin 2007 (2007-06-05), APPLIED CRYPTOGRAPHY AND NETWORK SECURITY; [LECTURE NOTES IN COMPUTER SCIENCE], SPRINGER BERLIN HEIDELBERG, BERLIN, HEIDELBERG, PAGE(S) 258 - 276 , XP019076275 ISBN: 9783540689133 le document en entier**
• **CHRISTINA BRZUSKA ET AL: "Security of Sanitizable Signatures Revisited" 18 mars 2009 (2009-03-18), PUBLIC KEY CRYPTOGRAPHY Â PKC 2009, SPRINGER BERLIN HEIDELBERG, BERLIN, HEIDELBERG, PAGE(S) 317 - 336 , XP019115182 ISBN: 9783642004674 alinéas [0002], [0005]**
• **XIAOFENG CHEN ET AL: "Chameleon Hashing Without Key Exposure" LECTURE NOTES IN COMPUTER SCIENCE, SPRINGER, DE LNKD-DOI:10.1007/B100936, vol. 3225, 21 septembre 2004 (2004-09-21), pages 87-98, XP007912633 ISSN: 0302-9743**
• **BENOÎT CHEVALLIER-MAMES ED - VICTOR SHOUP: "An Efficient CDH-Based Signature Scheme with a Tight Security Reduction" 1 janvier 2005 (2005-01-01), ADVANCES IN CRYPTOLOGY - CRYPTO 2005 LECTURE NOTES IN COMPUTER SCIENCE;;LNCS, SPRINGER, BERLIN, DE, PAGE(S) 511 - 526 , XP019016572 ISBN: 9783540281146 alinéa [0004]**

**Description**

L'invention concerne un procédé cryptographique permettant l'authentification anonyme et l'identification séparées d'un utilisateur, en particulier dans le domaine de la facturation avec anonymat de l'utilisateur.

Le domaine de la cryptographie a connu récemment un développement important. Diverses tâches cryptographiques peuvent être effectuées comme la signature d'un message par un émetteur, l'authentification de l'émetteur d'un message ou l'identification de l'émetteur d'un message par une unité vérificatrice. Ces tâches contribuent à garantir certains niveaux de sécurité à des services qui les utilisent.

Cependant, il peut exister des services qui requièrent ou garantissent en outre un certain niveau d'anonymat. Par exemple, un utilisateur peut souhaiter s'authentifier auprès d'une première entité afin de lui demander une action, sans que cette entité ne puisse connaître son identité, tout en s'identifiant auprès d'une deuxième entité sans que celle-ci n'ait connaissance de l'action requise auprès de la première entité. Ce type de besoin, l'anonymat, est lié à une problématique de protection de la vie privée (on parle habituellement de "privacy").

Un exemple de ce genre de situation se rencontre lorsqu'un utilisateur requiert auprès d'un fournisseur un service payant tout en souhaitant rester anonyme. Le fournisseur doit pouvoir envoyer une facture à l'utilisateur, pour être payé pour les services rendus, sans connaître son identité réelle. Par ailleurs, il est souhaitable que nul ne soit capable de faire le lien entre l'utilisateur et le service demandé.

La plupart des solutions de facturation existantes ne considèrent pas le cas où l'utilisateur est anonyme et ne répondent donc pas à la problématique exposée ci-avant de façon satisfaisante. Les tâches cryptographiques précitées ne permettent pas non plus de répondre à cette problématique.

Il existe certaines solutions d'abonnement, par prépaiement, permettant à l'utilisateur de payer un abonnement pour un certain nombre d'accès pendant une période de temps considérée, tout en permettant à l'utilisateur de conserver son anonymat dans une certaine limite.

Une de ces solutions (appelée « Anonymask ») consiste à créer, auprès d'un tiers, un compte permettant au client de payer de façon anonyme le fournisseur. Une autre solution consiste à obtenir, de façon anonyme et aveugle, la certification d'une suite de jetons correspondant à un nombre précis d'accès autorisés, lesquels seront par la suite envoyés un par un au fournisseur.

Enfin une dernière solution propose à un utilisateur faisant un achat sur internet de cliquer sur un bouton « acheter » qui va le rediriger vers un serveur tiers où une référence sur le produit a été rentrée par le fournisseur de service. Le client s'authentifie alors et son compte est débité, via une facturation future ou avec une carte de crédit.

Toutes ces solutions, bien qu'elles aillent dans le sens d'une amélioration de l'anonymat de l'utilisateur, ne présentent pas un niveau absolu d'anonymat. Par exemple, dans le cas de la dernière solution, toutes les transactions sont centralisées au niveau du serveur tiers, qui connaît l'identité du client et l'identité du fournisseur de service, en plus éventuellement d'une référence du produit acheté. Ce serveur tiers possède donc toutes les informations lui permettant de tracer des informations relatives à un même utilisateur. D'autres exemples et modes de réalisation de l'art antérieur peuvent être trouvés dans « Trapdoor Sanitizable Signatures and Their Application to Content Protection », S. Canard et al. (Applied Cryptography and Network Security, Springer Berlin Heidelberg) ; « Security of Sanitizable Signatures Revisited », C. Brzuska et al. (Public Key Cryptography, Springer Berlin Heidelberg) ; « Chameleon Hashing Without Key Exposure », X. Chen et al. (Lecture notes in computer science, Springer) ; « An efficient CDH-Based Signature Scheme with a Tight Security Réduction », Benoît Chevallier - Mames Ed - Victor Shoup (Advances in Cryptology - Crypto 2005 Lectures notes in computer science, Springer) ; EP 1 808 795 A2 et WO 2008/149029 A2.

Il n'existe donc à ce jour aucune solution permettant à un utilisateur d'obtenir des services payants auprès d'un fournisseur tout en conservant son anonymat, tout en permettant au fournisseur de facturer le service rendu sans principe d'abonnement.

La présente invention vient améliorer la situation.

En particulier, un objet de la présente invention est la mise en œuvre d'un procédé cryptographique permettant, d'une part, l'authentification d'un utilisateur par un fournisseur de services sans que celui-ci n'ait accès à l'identité de l'utilisateur et, d'autre part, l'identification de l'utilisateur par une entité de facturation sans que celle-ci n'ait connaissance du type de service fourni.

Elle propose à cet effet un procédé cryptographique d'authentification anonyme et d'identification d'une entité utilisatrice, respectivement par une entité vérificatrice et une entité identificatrice, dans lequel l'entité vérificatrice reçoit de l'entité utilisatrice au moins une première signature et un premier message et vérifie la première signature au moyen du premier message afin d'authentifier l'entité utilisatrice, et dans lequel l'entité identificatrice reçoit de l'entité vérificatrice une deuxième signature liée à la première signature et identifie l'entité utilisatrice au moyen de la deuxième signature et d'une clé secrète propre à l'entité identificatrice ; dans lequel l'entité vérificatrice génère la deuxième signature à partir de la première signature en fonction d'au moins une première partie du premier message reçu ; dans lequel l'entité vérificatrice génère un deuxième message à partir du premier message, en remplaçant la première partie du premier message par une donnée de substitution, et envoie le deuxième message à l'unité identificatrice.

Ceci permet de concentrer les moyens de calcul au niveau de l'entité vérificatrice plutôt qu'au niveau de l'entité utilisatrice. En outre, le deuxième message est avantageusement composé d'une façon simple à partir du premier message.

Dans un mode de réalisation préféré où l'entité vérificatrice est apte à fournir un service à l'entité utilisatrice si l'entité vérificatrice authentifie l'entité utilisatrice, et où l'entité identificatrice est apte à facturer ce service à l'entité utilisatrice, la première partie du premier message indique un service requis par l'entité utilisatrice et le deuxième message comporte au moins une partie indiquant le niveau de facturation lié au service requis.

Dans un mode de réalisation préféré, la donnée de substitution indique le niveau de facturation lié au service requis, ce qui permet d'indiquer à l'entité identificatrice O le niveau de facturation lié au service tout en masquant ce service.

Dans un autre mode de réalisation préféré, le premier message comprend une deuxième partie indiquant le niveau de facturation lié au service requis, la donnée de substitution étant alors envoyée par l'entité utilisatrice à l'entité vérificatrice, ce qui permet à l'entité utilisatrice $U_i$ d'indiquer elle-même le niveau de facturation du service qu'elle requiert.

De préférence, le procédé comprend, dans l'entité identificatrice, la vérification de la deuxième signature au moyen du deuxième message.

Il est aussi proposé un procédé cryptographique d'authentification anonyme et d'identification d'une entité utilisatrice, respectivement par une entité vérificatrice et une entité identificatrice, dans lequel l'entité vérificatrice reçoit de l'entité utilisatrice au moins une première signature et un premier message et vérifie la première signature au moyen du premier message afin d'authentifier l'entité utilisatrice, et dans lequel l'entité identificatrice reçoit de l'entité vérificatrice une deuxième signature liée à la première signature et identifie l'entité utilisatrice au moyen de la deuxième signature et d'une clé secrète propre à l'entité identificatrice ; dans lequel le premier message comprend une première partie, la première signature est générée, dans l'entité utilisatrice, en fonction du premier message et la deuxième signature est générée en fonction d'un deuxième message correspondant au premier message dans lequel la première partie a été remplacée par une donnée de substitution. Ici, le message destiné à l'entité identificatrice est directement généré par l'unité utilisatrice.

Avantageusement, la deuxième signature comprend au moins une partie supplémentaire comprise dans la première signature, le procédé comportant alors une étape de vérification, dans l'entité vérificatrice, afin de vérifier que les première et deuxième signatures comprennent cette partie supplémentaire. Ceci permet de vérifier que les deux signatures proviennent bien de la même entité utilisatrice.

Dans un mode de réalisation préféré, dans lequel l'entité vérificatrice est apte à fournir un service à l'entité utilisatrice si l'entité vérificatrice authentifie l'entité utilisatrice, et dans lequel l'entité identificatrice est apte à facturer ce service à l'entité utilisatrice, la première partie indique un service requis par l'entité utilisatrice et la donnée de substitution indique un niveau de facturation lié au service requis.

Préférentiellement, le procédé comporte une étape préliminaire d'enregistrement de l'entité utilisatrice auprès d'une entité de gestion dans laquelle l'entité utilisatrice obtient au moins un élément de l'entité de gestion, ledit élément étant utilisé pour générer la première signature. Ceci permet de lier la première signature au groupe géré par l'entité de gestion.

De préférence, cet élément est un certificat généré par l'entité de gestion en fonction d'un nombre aléatoire généré par l'entité utilisatrice. Ceci permet de lier la première signature à l'entité utilisatrice particulière au sein du groupe géré par l'entité de gestion.

Avantageusement, l'entité de gestion fournit le certificat à l'entité identificatrice et l'identification de l'entité utilisatrice est faite au moyen d'une partie au moins du certificat, d'une clé secrète propre à l'entité identificatrice et d'au moins une partie de la deuxième signature. L'identification de l'entité utilisatrice ne peut être ainsi effectuée que par l'entité identificatrice.

La présente invention propose par ailleurs un système cryptographique comprenant au moins une entité utilisatrice et une entité vérificatrice et une entité identificatrice apte à mettre en œuvre le procédé ci-avant. Un tel système comporte, de préférence, une entité de gestion.

Le procédé, objet de l'invention, sera mieux compris à la lecture de la description et à l'observation des dessins ci-après dans lesquels :

- la figure 1 est un schéma synoptique illustrant un système d'échange cryptographique utilisé par l'invention ;
- la figure 2 illustre les étapes du procédé cryptographique selon l'invention ;
- la figure 3A illustre les étapes d'un procédé selon un premier mode de réalisation de l'invention ;
- la figure 3B illustre les échanges dans le système cryptographique lors de la mise en œuvre du procédé selon un premier mode de réalisation de l'invention ;
- la figure 4A illustre les étapes d'un procédé selon un deuxième mode de réalisation de l'invention ;
- la figure 4B illustre les échanges dans le système cryptographique lors de la mise en œuvre du procédé selon un deuxième mode de réalisation de l'invention ;

- la figure 5A illustre les étapes d'un procédé selon un troisième mode de réalisation de l'invention ; et
- la figure 5B illustre les échanges dans le système cryptographique lors de la mise en œuvre du procédé selon un troisième mode de réalisation de l'invention.

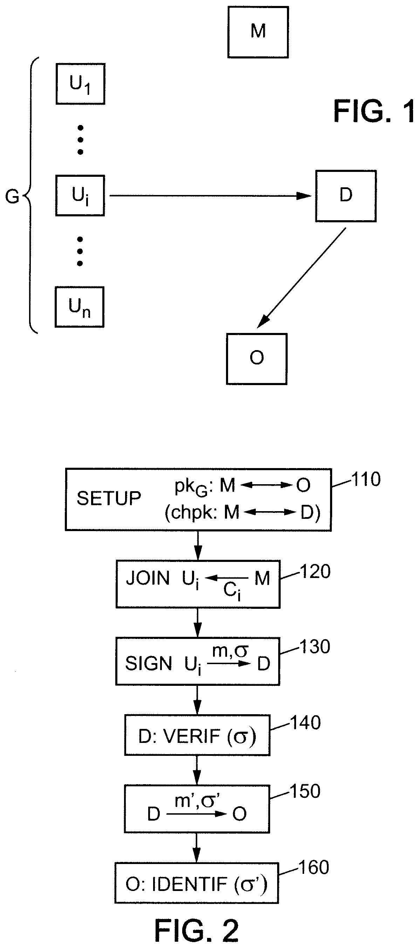

On se réfère d'abord à la **figure 1** sur laquelle est illustré un système d'échange cryptographique selon la présente invention.

Sur cette figure 1, une pluralité d'entités utilisatrices U1,...,$U_i$,...,Un forment un groupe G d'utilisateurs. Ces entités $U_i$ peuvent être authentifiées par une entité vérificatrice D, dans le but par exemple de fournir un service requis par un message envoyé par l'entité $U_i$. Le service doit être rendu dans le cadre du respect de la vie privée de l'entité $U_i$, c'est-à-dire que l'entité $U_i$ doit accéder au service de manière anonyme et qu'il ne doit pas être possible pour un tiers de tracer l'utilisation du service par l'entité $U_i$. Ce message ne doit pas trahir l'identité de l'unité $U_i$, afin de conserver son anonymat.

Le système présente par ailleurs une entité d'identification O, dont la fonction est d'identifier l'entité utilisatrice $U_i$, dans le but par exemple de lui facturer le service fourni par l'entité vérificatrice D, sans que l'entité d'identification O ne connaisse la nature de ce service.

Le système peut enfin présenter une entité de gestion M, dont le rôle peut être d'initialiser les paramètres et autres clés publiques ou secrètes nécessaires au procédé de la présente invention et affectées aux entités D et O, et d'autre part d'enregistrer les entités $U_i$ dans le groupe G des utilisateurs.

Les différentes entités présentées ci-avant doivent être aptes à effectuer un certain nombre de calculs cryptographiques. Pour ce faire, de telles entités peuvent comporter des moyens de calculs comme un processeur, un microprocesseur, ou toute autre moyen permettant d'effectuer un calcul ou de générer une valeur aléatoire.

On se réfère maintenant à la **figure 2** qui illustre le principe général d'un procédé cryptographique selon la présente invention.

Lors d'une première étape d'initialisation 110, l'entité de gestion M échange, d'une part, des données avec l'entité identificatrice O afin de définir une clé publique de groupe $pk_G$. L'entité de gestion M peut, d'autre part, échanger des données avec l'entité vérificatrice D afin de définir une clé publique secondaire chpk, par exemple une clé publique déléguée ou une clé publique de fonction caméléon dont la clé secrète correspondante pourra être détenue par D.

Une fois le système initialisé, une entité utilisatrice Ui peut alors s'enregistrer auprès de l'entité de gestion M, au cours d'une étape d'enregistrement 120. Pour ce faire, l'entité utilisatrice Ui obtient, au moyen d'un élément secret $x_i$ connu seulement de l'entité utilisatrice $U_i$, les moyens de produire une signature de groupe en interagissant avec le manager du groupe M et obtenant de celui-ci un certificat $C_i$.

Dans un mode particulier de réalisation dans lequel un schéma de signature de groupe de type ACJT (pour Ateniese, Camenish, Joye et Tsudik) est utilisé, cette étape d'enregistrement 120 peut consister en ce que l'entité utilisatrice $U_i$ génère une clé privée de signature $x_i$ et interagit avec l'entité de gestion M afin d'obtenir un certificat $C_i$ lui correspondant. La clé privée et le certificat $C_i$ sont tous les deux liés à une clé publique propre au groupe et commune a tous les membres de ce groupe. Seul l'entité M de gestion du groupe, possédant une clé secrète particulière (p',q'), est capable de délivrer un certificat de membre mais il ne connait pas la clé privée des membres, de telle sorte que cette entité M ne peut pas signer à la place d'une entité utilisatrice. L'entité de gestion M est par ailleurs capable de faire le lien entre le certificat $C_i$ fourni et l'identité réelle du membre.

L'entité utilisatrice $U_i$ peut alors envoyer un message m et une signature σ basée sur ce message m vers l'entité vérificatrice D au cours d'une étape de signature 130, par exemple dans le but de requérir un service de cette entité D.

On effectue alors, lors d'une étape 140 d'authentification, l'authentification de l'unité utilisatrice $U_i$ par la vérification de la signature de groupe avec le message m. Cette étape ne permet pas à l'entité vérificatrice D d'identifier l'entité utilisatrice $U_i$ dans le groupe G, ce qui permet de préserver l'anonymat de cette dernière. Si un service est requis et que l'authentification est positive, le service requis peut être fourni à l'entité $U_i$.

Lors d'une étape suivante 150, une deuxième signature σ' est transmise par l'entité vérificatrice D à une entité identificatrice O. Une telle signature σ' dépend de l'unité utilisatrice $U_i$, par exemple d'une partie $A_i$ de son certificat $C_i$, et permet à cette dernière entité O d'identifier l'unité utilisatrice $U_i$ au cours d'une étape 160, afin par exemple de lui adresser une facture sans connaître le service que cette entité $U_i$ a demandé à l'entité vérificatrice D.

Cette deuxième signature σ' peut être générée dans l'entité D à partir de la première signature σ, ou bien générée dans l'entité $U_i$ à partir de la première signature σ et transmise par l'entité D. Lors de cette étape 150, un deuxième message m' peut par ailleurs être transmis de l'entité D vers l'entité O, afin de permettre la vérification de la deuxième signature σ'.

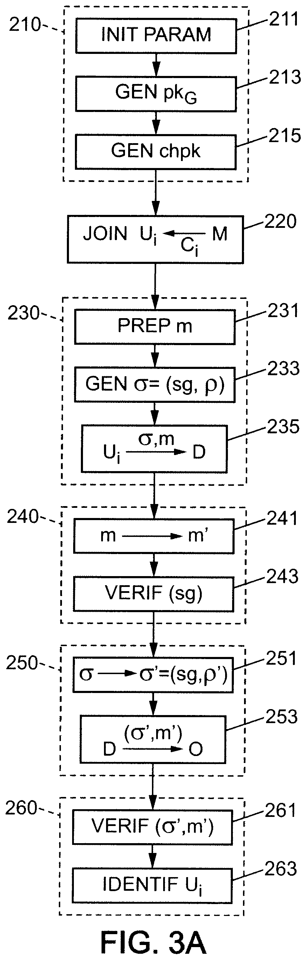

On se réfère maintenant à la **figure 3A,** laquelle illustre un procédé cryptographique selon un premier mode de réalisation de la présente invention.

Dans ce premier mode de réalisation, c'est l'entité vérificatrice D qui connait le niveau de facturation lié à un service requis par l'entité $U_i$ et qui va donc modifier un message reçu de l'entité $U_i$, avant de le transférer à l'entité identificatrice O qui effectue la facturation, afin de masquer la partie indicatrice du service requis par une partie indiquant un niveau de facturation.

Le procédé selon le premier mode de réalisation peut comporter une première étape d'initialisation 210 se décomposant en une première sous-étape 211 d'initialisation des paramètres du système, une deuxième sous-étape 213 de génération de la clé publique de groupe $pk_G$ et une troisième sous-étape 215 de génération de la clé publique de la fonction de hachage caméléon chpk.

Lors de la première sous-étape 211 d'initialisation des paramètres, l'entité M initialise d'abord les paramètres de sécurité du système $\varepsilon > 1$, $k$, $l_p$ pour la signature de groupe ainsi qu'un paramètre de sécurité $\lambda$, éventuellement égal à k, pour la partie signature déléguée.

Ensuite, lors de la deuxième sous-étape 213, la clé publique de groupe $pk_G$ est générée par la coopération entre les entités M et O, de la façon suivante :

1. L'entité M calcule les paramètres publics nécessaires pour le schéma cryptographique :

- $\lambda_1, \lambda_2, \gamma_1, \gamma_2$, des longueurs telles que $\lambda_1 > \varepsilon(\lambda_2 + k) + 2$, $\lambda_2 > 4l_p$,
- $\gamma_1 > \varepsilon(\gamma_2 + k) + 2$ et $\gamma_2 > \lambda_1 + 2$;
- les intervalles $\Lambda = ]2^{\lambda_1} - 2^{\lambda_2}, 2^{\lambda_1} + 2^{\lambda_2}[$ et $\Gamma = ]2^{\gamma_1} - 2^{\gamma_2}, 2^{\gamma_1} + 2^{\gamma_2}[$ ;
- $H : \{0,1\}^* \to \{0,1\}^k$ une fonction de hachage résistante aux collisions.

2. L'entité M calcule ensuite une partie de la clé publique de la signature de groupe à partir de sa paire de clé secrète (p',q'):

- On choisit $p,q$ de taille $l_p$ telles que $p = 2p'+1, q = 2q'+1$ premiers et on calcule $n = pq$.
- On choisit ensuite aléatoirement les variables $a, a_0, g, h \in QR(n)$ (avec $QR(n)$ le résidu quadratique modulo n).

3. L'entité identificatrice O génère ensuite une clé secrète x et la valeur publique y correspondante :

- Une clé secrète $x$ est choisi aléatoirement dans $Z^*_{p'q'}$.
- On calcule y selon $y = g^x \bmod n$.

La clé publique du groupe est alors :

$$pk_G = (n, a_0, a, y, g, h)$$

Enfin, lors de la troisième sous-étape 215, une clé publique de fonction de hachage caméléon chpk est générée par la coopération entre les entités M et D, de la façon suivante :

1. L'entité de gestion M calcule les paramètres cryptographiques suivants, nécessaires pour le schéma cryptographique :

- une fonction de hachage $H' : \{0,1\} \to \{0,1\}^\lambda$, résistante aux collisions, et potentiellement la même que la fonction H utilisée pour la signature de groupe;
- un schéma de fonction de hachage caméléon CH composé des trois algorithmes suivants

  ◦ L'algorithme « Setup » génère une paire de clés (*chpk,chsk*) liée à l'instance du schéma en fonction de l'entrée $1^\lambda$ ;
  ◦ L'algorithme « Proceed » qui retourne une valeur hachée h d'un message $m \in \{0,1\}^*$ en fonction dudit message, de la clé publique de l'instance *chpk* et d'un aléa $r \in \{0,1\}^\lambda$.
  ◦ L'algorithme « Forge » qui retourne un nouvel aléa r' en fonction de la clé secrète de la fonction caméléon *chsk*, d'un triplet composé du message m, de l'aléa r et de la valeur hachée h, et d'un nouveau message *m'*. Ce nouvel aléa *r'* vérifie que la valeur hachée h issue de l'algorithme « Proceed » effectué sur m, r et chpk soit la même que la valeur hachée issue de l'algorithme « Proceed » effectué sur m', r' et chpk, soit :

$$\text{Proceed}(m, r, chpk) = \text{Proceed}(m', r', chpk)$$

2. De son côté, l'entité vérificatrice D génère une paire de clés pour la fonction caméléon (*chpk,chsk*) en utilisant l'algorithme « Setup » tel que définit ci-avant.

L'étape d'initialisation 210 permet donc d'obtenir une paire de clés publiques de signature ($pk_G$,$chpk$) à partir de la clé secrète (p',q') de l'entité de gestion M, de la clé secrète x de l'entité identificatrice O et de la clé secrète chsk de la fonction caméléon générée par l'entité vérificatrice D.

Il est à noter que l'entité utilisatrice $U_i$ n'intervient pas à ce stade du procédé car, du point de vue de la signature de groupe, elle n'est pas encore enregistrée comme membre de groupe et, du point de vue de la signature déléguée, cette entité $U_i$ n'a pas de paire de clés à générer car elle utilisera la paire de clés publiques de signatures ($pk_G$,$chpk$).

Les utilisateurs $U_i$ peuvent ensuite venir s'enregistrer, lors de l'étape d'enregistrement 220, au groupe d'utilisateurs G auprès de l'entité de gestion M. A l'issue de cette étape 220, l'utilisateur obtient un secret $x_i$ connu de lui seul ainsi qu'un certificat $C_i$ d'appartenance au groupe pour pouvoir générer des signatures de groupe déléguées sur n'importe quel message. D'autre part, l'entité identificatrice O possède dans sa base de données les moyens d'identifier les signatures de l'entité utilisatrice $U_i$.

Cette étape d'enregistrement 220 peut se dérouler de la façon suivante :

1. L'entité $U_i$ choisit aléatoirement dans $]0,2^{\lambda 2}[$ une valeur secrète $\overline{x}_i$ et envoie à l'entité de gestion M un engagement $C_1 = g^{\overline{x}_i} h^{\overline{r}} \bmod n$ avec r choisi aléatoirement dans $]0,n^2[$ ainsi qu'une preuve $pok_1$ que l'engagement est bien construit.

2. L'entité M prend deux aléas $\alpha_i, \beta_i$ dans $]0,2^{\lambda 2}[$ et les envoie à l'entité $U_i$.

3. L'entité $U_i$ construit son secret $x_i = 2^{\lambda 1} + (\alpha_i \overline{x}_i + \beta_i \bmod 2^{\lambda 2})$ et envoie $C_2 = a^{x_i} \bmod n$ ainsi qu'une preuve $pok_2$ de bonne construction de celui-ci.

4. L'entité M peut maintenant créer le certificat de l'entité $U_i$, c'est-à-dire une signature de l'engagement $C_2$. Pour cela, elle choisit aléatoirement $e_i$ dans $\Gamma$ et calcule $A_i = (C_2 a_0)^{1/e_i} \bmod n$ en utilisant la connaissance de p' et q'.

5. L'entité M fournit {$U_i$, $A_i$, $e_i$} à l'entité identificatrice O pour qu'elle les stocke, ainsi que le certificat $C_i = \{A_i, e_i\}$ à l'entité utilisatrice $U_i$.

6. Enfin, l'entité $U_i$ vérifie son certificat $C_i$, en vérifiant si $a^{x_i} a_0 = A_i^{e_i} \bmod n$.

A l'issue de cette étape d'enregistrement 220, l'entité utilisatrice $U_i$ est munie d'un secret xi et d'un certificat $C_i$ = {$A_i, e_i$} qui lui sont propres. Elle peut alors signer n'importe quel message m grâce à ces informations.

Dans l'exemple considéré, le message m est une demande de service au fournisseur d'accès représenté par l'entité vérificatrice D. Une variable $\alpha$ est incluse dans le message m à transmettre afin de noter la description exacte du service demandé. Cette variable $\alpha$ est destinée à être modifiée par l'entité vérificatrice D, qui lui substitue une donnée de substitution comprenant, voire constituant, un code de facturation C, dans ce premier mode de réalisation.

L'étape 230 qui suit se décompose principalement en une première sous-étape 231 de préparation du message m, afin de rendre le message m modifiable par l'entité vérificatrice D, et une deuxième sous-étape 233 de génération d'une première signature $\sigma$ basée sur la signature de groupe sg et un nombre aléatoire $\rho$.

La première sous-étape 231 de préparation du message peut être faite de la façon suivante :

1. Le message $m \in \{0,1\}^*$ est fractionné en $m = m_d \| \alpha \| m_f$, où $\|$ représente la concaténation. La partie $\alpha$ du message m sert, d'une part, à indiquer à l'entité vérificatrice D le type de service désiré et, d'autre part, est modifiable par cette entité D dans le but d'obtenir un message m' ne permettant pas à une autre entité, notamment l'entité identificatrice O, de connaître le type de service requis. Par contre, les parties $m_d$ et $m_f$ ne sont pas modifiables par l'entité vérificatrice D (ni par personne d'autre).

2. On choisit alors aléatoirement $\rho$ dans $\{0,1\}^\lambda$ et on calcule une partie modifiée $\alpha'$ en utilisant l'algorithme « Proceed » tel que a'=Proceed ($\alpha, \rho, chpk$).

3. On concatène alors la partie modifiée $\alpha'$ entre les parties $m_d$ et $m_f$ non modifiées et on applique la fonction de hachage H' sur cette concaténation, selon la relation

$$m' = H'(m_d \| \alpha' \| m_f).$$

A l'issue de cette première sous-étape 231, on obtient bien un message modifié m' dans lequel la partie $\alpha$ identifiant le type de service requis par l'entité $U_i$ est formatée pour permettre l'utilisation du message m' dans l'algorithme de signature

La deuxième sous-étape 233 de génération d'une première signature $\sigma$ peut se faire de la façon suivante, au niveau de l'entité utilisatrice :

1. Une valeur $w$ est choisie aléatoirement dans $\{0,1\}^{2l}_p$

2. Les valeurs $T_1$, $T_2$ et $T_3$ sont calculées selon les formules suivantes :

$$T_1 = A_i y^w \bmod n$$

$$T_2 = g^w \bmod n$$

$$T_3 = g^{e_i} h^w \bmod n$$

3. Les valeurs $r_1$, $r_2$, $r_3$ et $r_4$ sont choisies aléatoirement telles que $r_1 \in \pm\{0,1\}^{\varepsilon(\gamma_2+k)}$, $r_2 \in \pm\{0,1\}^{\varepsilon(\lambda_2+k)}$, $r_3 \in \pm\{0,1\}^{\varepsilon(\gamma_1+2l_p+k+1)}$ et $r_4 \in \pm\{0,1\}^{\varepsilon(2l_p+k)}$.

4. Les valeurs $d_1$, $d_2$, $d_3$ et $d_4$ sont calculées selon les formules suivantes :

$$d_1 = T_1^{r_1} / \left( a^{r_2} y^{r_3} \right) \bmod n$$

$$d_2 = T_2^{r_1} / g^{r_3} \bmod n$$

$$d_3 = g^{r_4} \bmod n$$

$$d_4 = g^{r_1} h^{r_4} \bmod n$$

5. Une valeur c est générée, par application de la fonction de hachage sur une concaténation de valeurs selon la formule suivante :

$$c = H\left( g \| h \| y \| a_0 \| a \| T_1 \| T_2 \| T_3 \| d_1 \| d_2 \| d_3 \| d_4 \| m' \right)$$

6. Les valeurs $s_1$, $s_2$, $s_3$ et $s_4$ sont calculées selon les formules suivantes :

$$s_1 = r_1 - c\left( e_i - 2^{\gamma_1} \right)$$

$$s_2 = r_2 - c\left( x_i - 2^{\lambda_1} \right)$$

$$s_3 = r_3 - ce_i w$$

$$s_4 = r_4 - cw$$

7. La signature de groupe sg est générée selon la formule suivante :

$$sg = \left( c, s_1, s_2, s_3, s_4, T_1, T_2, T_3 \right).$$

Ainsi, à l'issue de la sous-étape 233, on obtient une première signature $\sigma$, définie sur $m$, telle que $\sigma = (sg, \rho)$. Cette première signature $\sigma$ et le message m correspondant sont envoyés à l'entité vérificatrice D lors d'une étape de transmission 235.

N'importe quelle entité connaissant un couple $(m, \sigma)$, ainsi que la clé publique du groupe pkG et la clé publique de la fonction caméléon chpk, peut vérifier l'exactitude de la signature lors d'une étape de vérification 240. Cette vérification peut s'effectuer de la même manière que lors de la vérification d'une signature déléguée classique, à la différence près que dans la présente invention, la vérification s'effectue non pas sur une signature classique (par exemple RSA), mais sur la signature de groupe choisie.

Une telle étape de vérification 240, dans le premier mode de réalisation de l'invention, est effectuée par l'unité vérificatrice D et se décompose en une première sous-étape 241 de reconstruction du message signé m' et une deuxième sous-étape 243 de vérification de la signature de groupe sg, grâce à m'.

La première sous-étape 241 de reconstruction du message signé m' peut se faire de la façon suivante :

1. La première signature $\sigma$ reçue de l'entité $U_i$ est décomposée en la signature de groupe sg et la valeur aléatoire $\rho$.
2. Le message m reçu de l'entité $U_i$ est décomposé en $m = m_d\|\alpha\|m_f$, afin de retrouver la partie $\alpha$.
3. On calcule la partie modifiée $\alpha'$ en appliquant l'algorithme « Proceed » tel que $\alpha'$=Proceed ($\alpha$, $\rho$, chpk).
4. On concatène alors la partie modifiée $\alpha'$ entre les parties $m_d$ et $m_f$ non modifiées et on applique la fonction de hachage H' sur cette concaténation, selon la relation $m'= H'(m_d\|\alpha'\|m_f)$, ce qui permet de recalculer le message formaté m'.

La deuxième sous-étape 243 de vérification de la signature de groupe sg se fait de la façon suivante :

1. On décompose sg dans les valeurs $C, S_1, S_2, S_3, S_4, T_1, T_2, T_3$.
2. Les valeurs $d_1', d_2', d_3'$ et $d_4'$ sont calculées selon les formules suivantes :

$$d_1' = a_0^c T_1^{s_1 - c2^{\gamma_1}} / \left( a^{s_2 - c2^{\lambda_1} y^{s_3}} \right) \bmod n$$

$$d_2' = T_2^{s_1 - c2^{\gamma_1}} / g^{s_3} \bmod n$$

$$d_3' = T_2^c g^{s_4} \bmod n$$

$$d_4' = T_3^c g^{s_1 - c2^{\gamma_1}} h^{s_4} \bmod n$$

3. Une valeur c' est générée, par application de la fonction de hachage H sur une concaténation de valeurs selon la formule suivante :

$$c' = H\left( g\|h\|y\|a_0\|a\|T_1\|T_2\|T_3\|d_1\|d_2\|d_3\|d_4\|m' \right)$$

4. La signature est considérée comme correcte, et l'authentification par l'entité vérificatrice D validée, si et seulement si les conditions suivantes sont respectées :

$$c = c'$$

$$s_1 \in \pm\{0,1\}^{\varepsilon(\gamma_2 + k) + 1}$$

$$s_2 \in \pm\{0,1\}^{\varepsilon(\lambda_2 + k) + 1}$$

$$s_3 \in \pm\{0,1\}^{\varepsilon(\gamma_1 + 2\ell_\rho + k + 1) + 1}$$

$$s_4 \in \pm\{0,1\}^{\varepsilon(2\ell_\rho + k) + 1}$$

Dans la mesure où l'authentification est positive, l'entité vérificatrice D peut alors fournir à l'entité utilisatrice requérante le service souhaité.

En ce qui concerne la facturation du service, il importe que l'entité effectuant la facturation, i.e. l'entité identificatrice O dans la présente invention, n'ait pas connaissance du type de service requis, c'est-à-dire qu'elle ne puisse pas avoir accès à la valeur a.

L'entité vérificatrice D connaissant la clé secrète de la fonction de hachage caméléon chsk, celle-ci peut être utilisée comme trappe de modification, à la réception d'une paire constituée du message m et de la première signature σ, et est capable de modifier certaines parties du message m qui sont autorisées à la modification, entre autres de remplacer la partie α indicative du service requis par une donnée de substitution correspondant à, ou comprenant, un code de facturation C.

Cette modification est obtenue de telle sorte que si l'anonymat de la signature est levé, ce sera toujours l'entité $U_i$ qui sera identifiée comme signataire initial.

Une telle modification est effectuée au cours de l'étape de transformation 250, et peut s'effectuer grâce à la clé secrète déléguée chsk. Pour ce faire, l'étape 250 comporte une sous-étape 251 permettant la génération d'un nouvel aléa ρ' comme suit :

1. La première signature σ reçue de l'entité $U_i$ est décomposée en la signature de groupe sg et la valeur aléatoire ρ.
2. Le message m reçu de l'entité $U_i$ est décomposé en $m = m_d\|\alpha\|m_f$, afin d'obtenir la partie a.
3. On calcule la valeur hachée α' en appliquant l'algorithme « Proceed » tel que α'=Proceed ($\alpha,\rho,chpk$).
4. On calcule un nouvel aléa ρ' en appliquant l'algorithme « Forge » en utilisant la clé secrète de la fonction caméléon chsk et la partie C introduite par l'entité D, selon la formule suivante :

$$\rho'=\text{Forge}\big(chsk,(\alpha,\rho,\alpha'),C\big)$$

Une deuxième signature $\sigma'= (sg,\rho')$ est ainsi obtenue à l'issue de la sous-étape 251, dans l'entité vérificatrice D, et est envoyée à l'entité identificatrice O, par exemple pour les besoins de la facturation, lors d'une étape de transmission 253.

Le principe d'une signature de groupe est qu'en cas de conflit, une entité dite « Juge » puisse révoquer l'anonymat de la signature de groupe. L'entité identificatrice O utilise cette propriété, lors d'une étape d'identification 260, afin de permettre au service de facturation de connaître l'identité de l'entité utilisatrice cliente du service. Une telle étape d'identification 260 s'apparente au protocole « Open » de la signature de Groupe choisie, ici ACJT, et comporte une étape 263 de levée d'anonymat réalisée de la façon suivante :

1. La partie $A_i$ du certificat $C_i$ de l'entité $U_i$ est retrouvé en calculant : $A_i = T_1 / T_2^x \bmod n$.

2. On prouve que l'opération s'est bien déroulée en vérifiant que :

$$\log_g y = \log_{T_2}\big(T_1 / A_i \bmod n\big).$$

Cette étape 263 peut être précédée par une étape 261 de vérification de la validité de la deuxième signature σ'similaire à l'étape de vérification 240, mais en utilisant cette fois-ci la deuxième signature σ' et le message $m'= m_d\|C\|m_f$ envoyé par l'entité D à l'entité O au cours de l'étape de transmission 253.

Ainsi, l'entité identificatrice O a retrouvé quelle entité $U_i$, dans le groupe, est l'auteur du message m et peut le prouver éventuellement, par exemple dans un cas de contestation de la facturation par l'entité utilisatrice $U_i$. Elle peut en conséquence lui envoyer une facture, sans connaître le service effectué par l'entité D. Dans ce premier mode de réalisation, c'est l'entité vérificatrice D qui insère la donnée de substitution comprenant le code de facturation C.

On voit bien ici que seule l'entité identificatrice O peut retrouver la partie $A_i$ du certificat $C_i$, car seule cette entité O connait la clé secrète x utilisée lors de l'étape 263. L'entité vérificatrice D, bien qu'ayant la connaissance de $T_1$ et $T_2$, présents dans la première signature σ, n'est pas capable d'effectuer l'opération de l'étape 263, ce qui garantit l'anonymat de l'utilisateur.

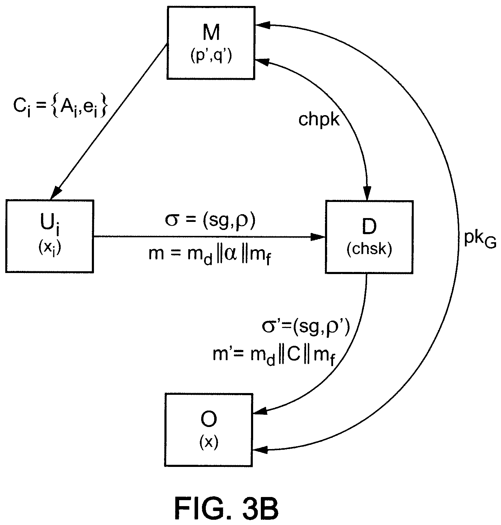

La **figure 3B** illustre les échanges de données effectués entre les entités du système cryptographique utilisant le procédé selon un premier mode de réalisation de l'invention.

Sur cette figure 3B, on voit bien que la première signature σ et le premier message m sont transmis de l'entité $U_i$ vers l'entité vérificatrice D, où ils sont modifiés et retransmis, sous la forme d'une deuxième signature σ' et d'un deuxième message m', vers l'entité identificatrice O.

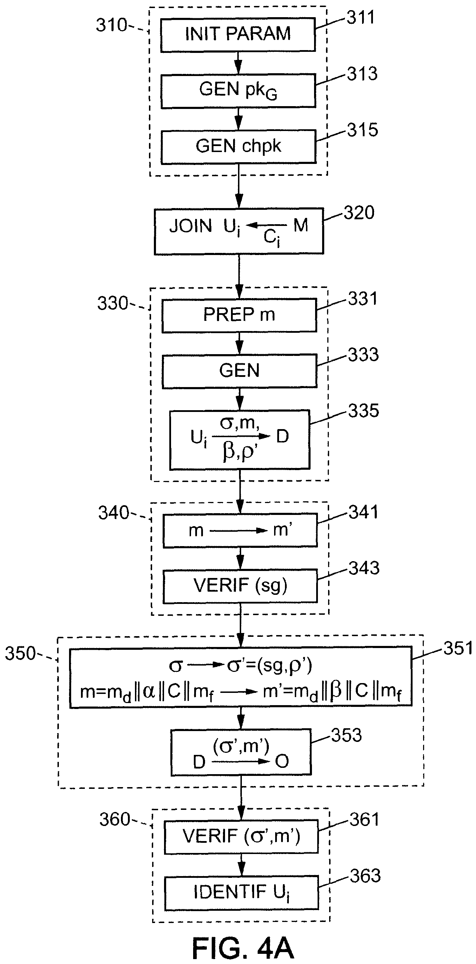

On se réfère maintenant à la **figure 4A,** laquelle illustre un procédé cryptographique selon un deuxième mode de réalisation de la présente invention, utilisant cette fois-ci une signature dite « caviardable », par exemple à base de fonction caméléon.

Dans ce deuxième mode de réalisation, c'est l'entité utilisatrice $U_i$ qui connait le niveau de facturation lié à un service qu'elle requiert auprès de l'entité vérificatrice D. Cette entité $U_i$ va donc transmettre un message comprenant une partie indiquant le service requis et une partie indiquant le niveau de facturation correspondant à l'entité D. Afin de protéger l'anonymat au sujet du service fourni, l'entité D masque alors la partie indiquant le service requis dans le message, grâce à une donnée de substitution β, et transfère le message modifié, qui comporte toujours une partie indiquant le niveau de facturation, à l'entité identificatrice O effectuant la facturation.

Dans ce deuxième mode de réalisation, l'étape d'initialisation 310 se compose de trois sous-parties 311, 313 et 315. Les étapes d'initialisation des paramètres 311 et de génération de la clé publique de groupe 313 sont similaires respectivement aux étapes 211 et 213. Lors de la troisième sous-étape 315, l'entité utilisatrice $U_i$ effectue l'initialisation de la signature caviardable et génère par exemple une paire de clé (chpk, chsk), de la façon suivante :

1. Il calcule les paramètres publics nécessaires pour le schéma :

- Soient $H'$: $\{0,1\}^* \rightarrow \{0,1\}^\lambda$ une fonction de hachage résistante aux collisions (potentiellement la même que pour la signature de groupe);
- $CH$ un schéma de fonction de hachage caméléon composé des trois algorithmes suivants :

    1. Setup génère la paire de clés (*chpk,chsk*) liée à l'instance du schéma en fonction de l'entrée $1^\lambda$;
    2. Proceed prend en entrée un message $m \in \{0,1\}^*$, la clé publique de l'instance *chpk* et un aléa $r \in \{0,1\}^\lambda$ et retourne le haché $h$ du message $m$ en fonction de l'aléa $r$ ;
    3. Forge prend en entrée la clé secrète de la fonction caméléon *chsk*, un triplet (message, aléa et haché correspondant) $(m,r,h)$ et un nouveau message $m'$. Il retourne un nouvel aléa $r'$ tel que :

$$\text{Proceed}\,(m,r,chpk) = \text{Proceed}\,(m',r',chpk)$$

2. Il génère une paire de clés pour la fonction caméléon (*chpk,chsk*) en utilisant l'algorithme CH.Setup.

L'étape d'enregistrement 320 est similaire à l'étape 220 du premier mode de réalisation décrit ci-avant.

Ce deuxième mode de réalisation se distingue par l'étape de signature 330 qui se décompose en une première sous-étape 331 de préparation du message m, afin de rendre le message m caviardable par l'entité vérificatrice D, et une deuxième étape 333 de génération d'une première signature σ basée sur la signature de groupe sg et un nombre aléatoire ρ.

La première sous-étape 331 de préparation du message peut être faite de la façon suivante :

1. Le message $m \in \{0,1\}^*$ est fractionné en $m = m_d\|\alpha\|C\|m_f$, où $\|$ représente la concaténation. La première partie α du message m sert, d'une part, à indiquer à l'entité vérificatrice D le type de service désiré et la deuxième partie C du message m sert, d'autre part, à indiquer le niveau de facturation associé à ce service.

2. On choisit alors aléatoirement ρ dans $\{0,1\}^\lambda$ et on calcule une partie modifiée α' en utilisant l'algorithme « Proceed » tel que a'=Proceed ($\alpha,\rho,chpk$).

3. On concatène alors la partie modifiée α' entre les parties $m_d$, C et $m_f$ non modifiées et on applique la fonction de hachage H' sur cette concaténation, selon la relation

$$m' = H'(m_d\|\alpha'\|C\|m_f).$$

4. On choisit alors aléatoirement β dans $\{0,1\}^\lambda$. Cette valeur β peut être utilisée comme version caviardée de α, comme une donnée de substitution dans l'entité vérificatrice D, et peut être telle, par exemple que β=$, où le symbole $ signifie que cette partie du message initial a été supprimée.

5. On calcule un nouvel aléa ρ' correspondant à β en appliquant l'algorithme « Forge » selon la formule suivante :

$$\rho'=\text{Forge}\big(chsk,(\alpha,\rho,\alpha'),\beta\big)$$

A l'issue de cette première sous-étape, on obtient bien un message modifié m' dans lequel la partie a identifiant le type de service requis par l'entité $U_i$ n'est plus accessible.

La deuxième sous-étape 333 de génération d'une première signature σ, au niveau de l'entité utilisatrice $U_i$, est identique à la deuxième sous-étape de génération de l'étape 233 décrite ci-avant.

Ainsi, à l'issue de cette sous-étape 333, on obtient d'une part une première signature σ, définie sur $m$, telle que $\sigma = (sg,\rho)$, comme lors de la sous-étape 233. Cependant, on obtient ici en outre les valeurs β et ρ'. Ces valeurs β et ρ', ainsi que la première signature σ et le message m sont envoyés à l'entité vérificatrice D, qui va se servir de ces valeurs β et ρ' pour caviarder le message m qu'elle reçoit.

N'importe quelle entité connaissant un couple (m,σ), ainsi que la clé publique du groupe pkG et la clé publique de la fonction caméléon chpk, peut vérifier l'exactitude de la signature lors d'une étape de vérification 340. Cette vérification peut s'effectuer de la même manière que lors de la vérification d'une signature caviardable standard, à la différence près que dans la présente invention, la vérification s'effectue non pas sur la signature standard, mais sur la signature de groupe correspondante.

Une telle étape de vérification 340, dans le deuxième mode de réalisation de l'invention, est effectuée par l'unité vérificatrice D et se décompose en une première sous-étape 341 de reconstruction du message signé m' et une deuxième sous-étape 343 de vérification de la signature de groupe sg, grâce à m'.

La première sous-étape 341 de reconstruction du message signé m' peut se faire de la façon suivante :

1. La première signature σ reçue de l'entité $U_i$ est décomposée en la signature de groupe sg et la valeur aléatoire ρ.
2. Le message m reçu de l'entité $U_i$ est décomposé en $m = m_d \| a \| C \| m_f$.
3. On calcule la partie modifiée α' en appliquant l'algorithme « Proceed » tel que a'=Proceed $(\alpha,\rho,chpk)$.
4. On concatène alors la partie modifiée α' entre les parties $m_d$ et $m_f$ non modifiées et on applique la fonction de hachage H' sur cette concaténation, selon la relation $m'=H'(m_d \| \alpha' \| C \| m_f)$, ce qui permet d'obtenir le message m'.

La deuxième sous-étape 343 de vérification de la signature de groupe sg se fait de la façon suivante, similaire à l'étape 243 de vérification du premier mode de réalisation :

1. On décompose sg dans les valeurs $c,s_1,s_2,s_3,s_4,T_1,T_2,T_3$.
2. Les valeurs $d_1',d_2',d_3'$ et $d_4'$ sont calculées selon les formules suivantes :

$$d_1' = a_0^c T_1^{s_1 - c 2^{\gamma_1}} / \left( a^{s_2 - c 2^{\gamma_1} y^{s_3}} \right) \bmod n$$

$$d_2' = T_2^{s_1 - c 2^{\gamma_1}} / g^{s_3} \bmod n$$

$$d_3' = T_2^c g^{s_4} \bmod n$$

$$d_4' = T_3^c g^{s_1 - c 2^{\gamma_1}} h^{s_4} \bmod n$$

3. Une valeur c'est générée, par application de la fonction de hachage H sur une concaténation de valeurs selon la formule suivante :

$$c' = H\left( g \| h \| y \| a_0 \| a \| T_1 \| T_2 \| T_3 \| d_1' \| d_2' \| d_3' \| d_4' \| m' \right)$$

4. La signature est considérée comme correcte, et la vérification par l'entité vérificatrice D validée, si et seulement si les conditions suivantes sont respectées :

$$c = c'$$

$$s_1 \in \pm\{0,1\}^{\varepsilon(\gamma_2 + k)+1}$$

$$s_2 \in \pm\{0,1\}^{\varepsilon(\lambda_2+k)+1}$$

$$s_3 \in \pm\{0,1\}^{\varepsilon(\gamma_1+2l_p+k+1)+1}$$

$$s_4 \in \pm\{0,1\}^{\varepsilon(2l_p+k)+1}$$

Dans la mesure où la vérification est positive, l'entité vérificatrice D peut alors fournir à l'entité utilisatrice $U_i$ requérante le service souhaité, sans connaître son identité.

Par ailleurs, l'entité vérificatrice D ayant reçu l'aléa $\rho'$, elle est capable de l'utiliser comme trappe de suppression pour supprimer la partie du message m reçu de l'entité $U_i$ et comprenant la description du service requis. En d'autres termes, l'entité D peut se servir de $\rho'$ pour supprimer la partie $\alpha$ du message m de telle sorte que si l'anonymat de la signature est levée, ce sera toujours le signataire initial $U_i$ qui est retrouvé.

Une telle suppression est effectuée au cours d'une étape de suppression 350, et peut s'effectuer grâce à la clé publique déléguée chpk. Pour ce faire, l'étape 350 comporte une sous-étape 351 comme suit :

1. La première signature $\sigma$ reçue de l'entité $U_i$ est décomposée en la signature de groupe sg et la valeur aléatoire $\rho$.
2. Le message m reçu de l'entité $U_i$ est décomposé en $m = m_d\|\alpha\|C\|m_f$, afin d'obtenir la partie a.
3. On vérifie que la valeur hachée h de la partie $\alpha$ obtenue par l'algorithme « Proceed » est identique à la valeur hachée h' de la valeur $\beta$ obtenue par ce même algorithme, ce qui revient à vérifier la relation suivante :

$$\text{Proceed}\left(\alpha,\rho,chpk\right) = \text{Proceed}\left(\beta,\rho',chpk\right).$$

4. Si les valeurs hachée h et h' sont identiques (i.e. si la relation ci-dessus est vérifiée), on modifie le message m en remplaçant la partie $\alpha$ par la donnée de substitution $\beta$, afin d'obtenir un message caviardé m' tel que $m'= m_d\|\beta\|C\|m_f$.
5. Une deuxième signature modifiée $\sigma'=(sg,\rho')$ ainsi qu'un deuxième message m', caviardé, sont ainsi obtenus à l'issue de la sous-étape 351, dans l'entité vérificatrice D, et peuvent être envoyés à l'entité identificatrice O, pour les besoins de la facturation, lors d'une étape de transmission 353.

L'entité identificatrice O, recevant m' et $\sigma' = (sg,\rho')$, va alors retrouver l'identité de $U_i$ grâce à une étape d'identification 360, afin de permettre la facturation de l'entité utilisatrice cliente du service. Encore une fois, une telle étape d'identification 360 s'apparente au protocole « Open » de la signature de Groupe choisie, ici ACJT, et comporte une étape 363 de levée d'anonymat réalisée de la façon suivante :

1. La partie $A_i$ du certificat $C_i$ de l'entité $U_i$ est retrouvée en calculant : $A_i = T_1 / T_2^x \bmod n$ .
2. On prouve que l'opération s'est bien déroulée en vérifiant que :

$$\log_g y = \log_{T_2}\left(T_1 / A_i \bmod n\right).$$

$$U_i$$

Cette étape 363 peut être précédée par une étape 361 de vérification de la validité de la signature similaire à l'étape de vérification 340.

Ainsi, l'entité identificatrice O a retrouvé quelle entité $U_i$, dans le groupe, est l'auteur du message m et peut le prouver éventuellement. Elle peut en conséquence lui envoyer une facture, sans connaître le service effectué par l'entité D.

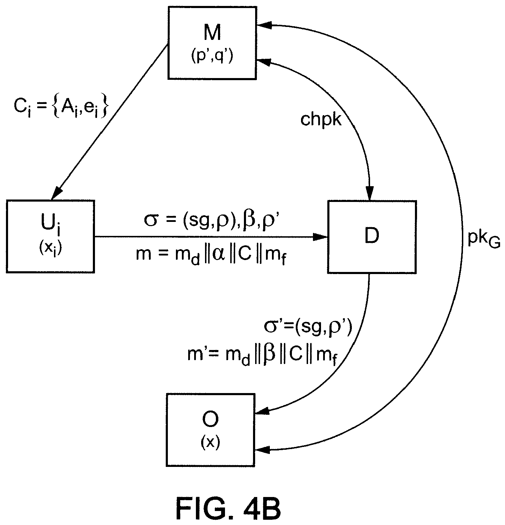

La **figure 4B** illustre les échanges de données effectués entre les entités du système cryptographique utilisant le procédé selon un deuxième mode de réalisation de l'invention.

Sur cette figure 4B, on voit bien que la première signature $\sigma$ et le premier message m, ainsi que les nombres $\beta$ et $\rho'$, sont transmis de l'entité $U_i$ vers l'entité vérificatrice D, laquelle utilise les nombres $\beta$ et $\rho'$ pour générer une deuxième signature $\sigma'$ et un deuxième message m' transmis vers l'entité identificatrice O.

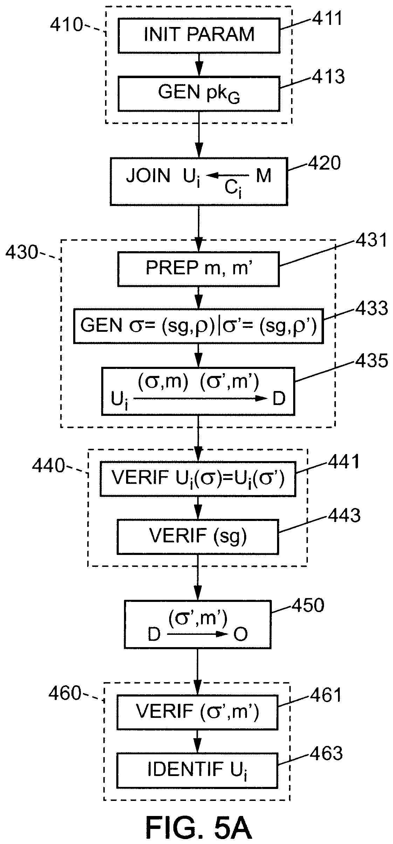

On se réfère maintenant à la **figure 5A,** laquelle illustre un procédé cryptographique selon un troisième mode de réalisation de la présente invention, dans lequel la signature et le message destinés à l'entité identificatrice O sont préparés dans l'entité utilisatrice $U_i$, et non plus dans l'entité vérificatrice D.

Dans ce troisième mode de réalisation, l'étape d'initialisation 410 peut ne comporter qu'une sous-étape 411 d'initialisation des paramètres et une sous-étape 413 de génération d'une clé publique similaires respectivement aux étapes 211,311 et 213,313 précédemment détaillées. L'entité utilisatrice $U_i$ gérant la signature et le message destinés à l'entité identificatrice O, une étape de génération de signature déléguée n'est pas obligatoire.

Par ailleurs, l'étape d'enregistrement 420 est similaire aux étapes 220 et 320 du premier et deuxième modes de réalisation décrits ci-avant.

Ce troisième mode de réalisation se distingue par l'étape de signature 430 qui comporte une première sous-étape 431 de préparation de deux messages m et m', et une deuxième étape 433 de génération de deux signatures $\sigma$ et $\sigma'$.

La première sous-étape 431 consiste à préparer deux messages m et m' selon la procédure suivante :

> 1. Un premier message $m \in \{0,1\}^*$ est fractionné en $m = m_d \| \alpha \| m_f$, où $\|$ la partie $\alpha$ du message m sert à indiquer à l'entité vérificatrice D le type de service désiré.
> 2. Un deuxième message $m' \in \{0,1\}^*$ est fractionné en $m = m_d \| C \| m_f$, où la partie C du message m' sert à indiquer à l'entité identificatrice O le niveau de facturation associé au service désiré.

La deuxième sous-étape 433 de génération consiste à générer deux signatures $\sigma$ et $\sigma'$, sur la base des messages m et m', d'une façon similaire aux sous-étapes 233 ou 333 décrites ci-avant.

En particulier, la première signature $\sigma$ correspond à une signature de groupe sg, générée à partir du message m de la façon suivante :

> 1. Une valeur $w$ est choisie aléatoirement dans $\{0,1\}^{2l_p}$
> 2. Les valeurs $T_1, T_2$ et $T_3$ sont calculées selon les formules suivantes :

$$T_1 = A_i\, y^w \bmod n$$

$$T_2 = g^w \bmod n$$

$$T_3 = g^{e_i} h^w \bmod n$$

> 3. Les valeurs $r_1, r_2, r_3$ et $r_4$ sont choisies aléatoirement telles que $r_1 \in \pm\{0,1\}^{\varepsilon(\gamma_2+k)}$, $r_2 \in \pm\{0,1\}^{\varepsilon(\lambda_2+k)}$, $r_3 \in \pm\{0,1\}^{\varepsilon(\gamma_1+2l_p+k+1)}$ et $r_4 \in \pm\{0,1\}^{\varepsilon(2l_p+k)}$.
> 4. Les valeurs $d_1, d_2, d_3$ et $d_4$ sont calculées selon les formules suivantes :

$$d_1 = T_1^{r_1} / \left( a^{r_2}\, y^{r_3} \right) \bmod n$$

$$d_2 = T_2^{r_1} / g^{r_3} \bmod n$$

$$d_3 = g^{r_4} \bmod n$$

$$d_4 = g^{r_1} h^{r_4} \bmod n$$

> 5. Une valeur c est générée, par application de la fonction de hachage sur une concaténation de valeurs selon la formule suivante :

$$c = H\left( g \| h \| y \| a_0 \| a \| T_1 \| T_2 \| T_3 \| d_1 \| d_2 \| d_3 \| d_4 \| m \right)$$

> 6. Les valeurs $s_1, s_2, s_3$ et $s_4$ sont calculées selon les formules suivantes :

$$s_1 = r_1 - c\left(e_i - 2^{\gamma_1}\right)$$

$$s_2 = r_2 - c\left(x_i - 2^{\lambda_1}\right)$$

$$s_3 = r_3 - ce_iw$$

$$s_4 = r - cw$$

7. La signature de groupe est générée selon la formule suivante :

$$sg = \left(c, s_1, s_2, s_3, s_4, T_1, T_2, T_3\right)$$

La deuxième signature σ' correspond à une signature de groupe sg', générée à partir du message m' de la façon suivante :

$$c = H\left(g\|h\|y\|a_0\|a\|T_1\|T_2\|T_3\|d_1\|d_2\|d_3\|d_4\|m'\right)$$

1. Une valeur $w'$ est choisie aléatoirement dans $\{0,1\}^{2l}_p$
2. Les valeurs $T_1', T_2'$ et $T_3'$ sont calculées selon les formules suivantes :

$$T_1' = A_i y^{w'} \bmod n$$

$$T_2' = g^{w'} \bmod n$$

$$T_3' = g^{e_i} h^{w'} \bmod n$$

3. Les valeurs $r_1', r_2', r_3'$ et $r_4'$ sont choisies aléatoirement telles que $r_1' \in \pm\{0,1\}^{\varepsilon(\gamma_2+k)}$, $r_2' \in \pm\{0,1\}^{\varepsilon(\lambda_2+k)}$, $r_3' \in \pm\{0,1\}^{\varepsilon(\gamma_1+2l_p+k+1)}$ et $r_4' \in \pm\{0,1\}^{\varepsilon(2l_p+k)}$.
4. Les valeurs $d_1', d_2', d_3'$ et $d_4'$ sont calculées selon les formules suivantes :

$$d_1' = T_1'^{r_1'} / \left(a^{r_2'} y^{r_3'}\right) \bmod n$$

$$d_2' = T_2'^{r_1'} / g^{r_3'} \bmod n$$

$$d_3' = g^{r_4'} \bmod n$$

$$d_4' = g^{r_1'} h^{r_4'} \bmod n$$

5. Une valeur c est générée, par application de la fonction de hachage sur une concaténation de valeurs selon la formule suivante :

$$c' = H\left(g\|h\|y\|a_0\|a\|T_1\|T_2\|T_3\|d_1\|d_2\|d_3\|d_4\|m'\right)$$

6. Les valeurs $s_1', s_2', s_3'$ et $s_4'$ sont calculées selon les formules suivantes :

$$s_1' = r_1' - c'\left(e_i - 2^{\gamma_i}\right)$$

$$s_2' = r_2' - c'\left(x_i - 2^{\lambda_i}\right)$$

$$s_3' = r_3' - c'e_i w'$$

$$s_4' = r_4' - c' w'$$

7. La signature de groupe est générée selon la formule suivante :

$$sg' = \left(c', s_1', s_2', s_3', s_4', T_1', T_2', T_3'\right)$$

Ainsi, à l'issue de la sous-étape 433, on obtient une première signature σ=sg, définie sur le message *m*, et une deuxième signature σ'=sg', définie sur le message m'. Ces signatures σ et σ', ainsi que les messages m et m', sont envoyés à l'entité vérificatrice D lors d'une étape de transmission 435.

Une étape 440 d'authentification de l'entité utilisatrice $U_i$ est alors effectuée par l'entité vérificatrice D. Celle-ci comporte une première sous-étape 441 de vérification de la cohérence des deux couples messages signatures et en particulier de l'homogénéité de leur provenance. Une seconde sous-étape 443 consiste ensuite en la vérification de la signature de groupe sg, grâce à m'. Cette étape est similaire à l'étape 243 ci-avant.

Dans le cas particulier du troisième mode de réalisation, il est avantageux de pouvoir vérifier que c'est le même utilisateur $U_i$ qui est à l'origine des signatures σ et σ', et des messages m et m'. Pour ce faire, la deuxième signature de groupe sg' peut comporter un élément commun avec la première signature de groupe sg. Par exemple, sg' peut être composée de la façon suivante :

$$sg' = \left(c', s_1', s_2', s_3', s_4', T_1', T_2', T_3', T_3\right)$$

Ainsi, une étape 441 de vérification supplémentaire pourra être effectuée, par l'unité D, afin de s'assurer que sg et sg' comprennent l'élément $T_3$ commun. Il peut aussi être possible pour $U_i$ de prouver qu'il connaît par exemple un ou plusieurs éléments secrets utilisés pour calculer à la fois sg et sg' (par exemple $e_i$ pour calculer $T_3$ et $T'_3$.

Une fois cette première vérification 441 effectuée, une étape 443 de vérification de la signature de groupe sg peut se dérouler de façon similaire à l'étape 243 ci-avant, afin de déterminer si l'entité vérificatrice D fournit, ou non, le service souhaité à l'entité utilisatrice $U_i$ requérante, sans connaître son identité.

La deuxième signature σ' et le message m' sont ensuite envoyés à l'entité identificatrice O, pour les besoins de la facturation, lors d'une étape de transmission 450.

L'entité identificatrice O, recevant σ' et m' peut alors retrouver l'identité de $U_i$ grâce à une étape d'identification 460 similaire aux étapes d'identification 260 ou 360 décrites ci-avant. Elle peut alors lui envoyer une facture, sans connaître le service effectué par l'entité D pour cette entité $U_i$.

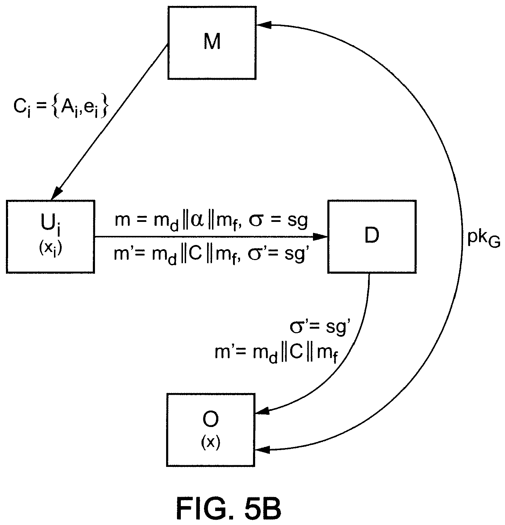

La **figure 5B** illustre les échanges de données effectués entre les entités du système cryptographique utilisant le procédé selon le troisième mode de réalisation de l'invention.

Sur cette figure 5B, on voit bien que la première et deuxième signature σ et σ', ainsi que le premier et deuxième message m et m', sont générés par l'entité $U_i$ et transmisent vers l'entité vérificatrice D, celle-ci ne faisant alors que retransmettre la deuxième signature σ' et le deuxième message m' vers l'entité identificatrice O.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

En particulier, le rôle de l'entité de gestion M peut être joué par l'entité identificatrice O, voire même par l'entité vérificatrice D. Dans ce dernier cas, il convient cependant de veiller à ce que les fonctions de révocation d'anonymat et de gestion de groupe soient bien gérées séparément, en particulier en ce qui concerne la signature de groupe sg choisi.

De plus, le rôle joué par l'entité de vérification O, notamment pour lever l'anonymat d'une signature σ, peut être aussi joué par plusieurs entités de vérification $O_i$, de telle sorte qu'il soit nécessaire que toutes ces entités $O_j$ soient nécessairement présentes et actives pour lever l'anonymat d'une signature. Ceci permet notamment d'empêcher, si besoin, une entité O et une entité D frauduleuses de vouloir lever l'anonymat d'une signature σ.

**Revendications**

1. Procédé cryptographique d'authentification anonyme et d'identification d'une entité utilisatrice ($U_i$) respectivement par une entité vérificatrice (D) et une entité identificatrice (O), **caractérisé en ce que** :

   - l'entité vérificatrice (D) reçoit (130) de l'entité utilisatrice ($U_i$) au moins une première signature ($\sigma$) générée à partir d'une signature de groupe et un premier message (m) et vérifie (140) la première signature ($\sigma$) au moyen du premier message (m) afin d'authentifier l'entité utilisatrice; et **caractérisé en ce que**,
   - l'entité identificatrice (O) reçoit (150) de l'entité vérificatrice (D) une deuxième signature ($\sigma$') liée à la première signature ($\sigma$) et identifie (160) l'entité utilisatrice au moyen de la deuxième signature et d'une clé secrète (x) propre à l'entité identificatrice (O) ;

   dans lequel le premier message (m) se décompose en une première partie $\alpha$ et deux parties $m_d$ et $m_f$ selon m = $m_d \| \alpha \| m_f$, où $\|$ représente une concaténation ;
   dans lequel l'entité vérificatrice (D) génère (251) la deuxième signature ($\sigma$') à partir de la première signature ($\sigma$) en fonction d'au moins la première partie ($\alpha$) du premier message (m) reçu et d'une clé secrète (chsk) d'une fonction de hachage caméléon ;
   dans lequel l'entité vérificatrice (D) génère (251) un deuxième message (m') à partir du premier message (m), en remplaçant la première partie ($\alpha$) du premier message par une donnée de substitution (C), et envoie (253) le deuxième message (m') à l'unité identificatrice (O).

2. Procédé cryptographique selon la revendication 1, dans lequel l'entité vérificatrice (D) est apte à fournir un service à l'entité utilisatrice ($U_i$) si l'entité vérificatrice (D) authentifie l'entité utilisatrice ($U_i$), et dans lequel l'entité identificatrice (O) est apte à facturer ce service à l'entité utilisatrice ($U_i$), **caractérisé en ce que** la première partie ($\alpha$) indique un service requis par l'entité utilisatrice ($U_i$) et la donnée de substitution comprend une partie (C) indiquant un niveau de facturation lié au service requis.

3. Procédé cryptographique d'authentification anonyme et d'identification d'une entité utilisatrice ($U_i$) respectivement par une entité vérificatrice (D) et une entité identificatrice (O), **caractérisé en ce que** :

   - l'entité vérificatrice (D) reçoit (130) de l'entité utilisatrice ($U_i$) au moins une première signature ($\sigma$) générée à partir d'une signature de groupe et un premier message (m) et vérifie (140) la première signature ($\sigma$) au moyen du premier message (m) afin d'authentifier l'entité utilisatrice; et **caractérisé en ce que**,
   - l'entité identificatrice (O) reçoit (150) de l'entité vérificatrice (D) une deuxième signature ($\sigma$') liée à la première signature ($\sigma$) et identifie (160) l'entité utilisatrice au moyen de la deuxième signature et d'une clé secrète (x) propre à l'entité identificatrice (O) ;

   dans lequel le premier message (m) se décompose en au moins une première partie $\alpha$, une deuxième partie C et deux parties $m_d$ et $m_f$ selon m = $m_d \| \alpha \| C \| m_f$, où $\|$ représente une concaténation ;
   dans lequel l'entité vérificatrice (D) génère (351) la deuxième signature ($\sigma$') à partir de la première signature ($\sigma$) en fonction d'au moins la première partie ($\alpha$) du premier message (m) reçu et d'une clé publique (chpk) d'une fonction de hachage caméléon ;
   dans lequel l'entité vérificatrice (D) génère (251,351) un deuxième message (m') à partir du premier message (m), en remplaçant la première partie ($\alpha$) du premier message par une donnée de substitution ($\beta$), et envoie (253) le deuxième message (m') à l'unité identificatrice (O).

4. Procédé cryptographique selon la revendication 3, dans lequel l'entité vérificatrice (D) est apte à fournir un service à l'entité utilisatrice ($U_i$) si l'entité vérificatrice (D) authentifie l'entité utilisatrice ($U_i$), et dans lequel l'entité identificatrice (O) est apte à facturer ce service à l'entité utilisatrice ($U_i$), **caractérisé en ce que** la première partie ($\alpha$) indique un service requis par l'entité utilisatrice ($U_i$), la deuxième partie (C) du premier message indique le niveau de facturation lié au service requis, et **en ce que** la donnée de substitution ($\beta$) du premier message est envoyée par l'entité utilisatrice ($U_i$) à l'entité vérificatrice (D).

5. Procédé cryptographique selon l'une des revendications 1 à 4, **caractérisé en ce qu'**il comprend, dans l'entité identificatrice (O), la vérification (261,361) de la deuxième signature ($\sigma$') au moyen du deuxième message (m').

6. Procédé cryptographique d'authentification anonyme et d'identification d'une entité utilisatrice ($U_i$) respectivement par une entité vérificatrice (D) et une entité identificatrice (O), **caractérisé en ce que** :

- l'entité vérificatrice (D) reçoit (130) de l'entité utilisatrice (U$_i$) au moins une première signature ($\sigma$) générée à partir d'une signature de groupe et un premier message (m) et vérifie (140) la première signature ($\sigma$) au moyen du premier message (m) afin d'authentifier l'entité utilisatrice; et **caractérisé en ce que**,
- l'entité identificatrice (O) reçoit (150) de l'entité vérificatrice (D) une deuxième signature ($\sigma$') liée à la première signature ($\sigma$) et identifie (160) l'entité utilisatrice au moyen de la deuxième signature et d'une clé secrète (x) propre à l'entité identificatrice (O),

dans lequel le premier message (m) se décompose en au moins une première partie $\alpha$ et deux parties m$_d$ et m$_f$ selon m = m$_d$‖$\alpha$‖m$_f$, où ‖ représente une concaténation ;
dans l'entité utilisatrice (U$_i$), la première signature ($\sigma$) est générée (433) en fonction du premier message (m) et la deuxième signature ($\sigma$') est générée (433) en fonction d'un deuxième message (m') et d'une clé publique (chpk) d'une fonction de hachage caméléon ; ledit deuxième message (m') correspondant au premier message (m) dans lequel la première partie ($\alpha$) a été remplacée par une donnée de substitution (C).

**7.** Procédé cryptographique selon la revendication 6, dans lequel la deuxième signature ($\sigma$') comprend au moins une partie supplémentaire (T$_3$) comprise dans la première signature ($\sigma$), **caractérisé en ce qu'**il comporte une étape (441) de vérification, dans l'entité vérificatrice (D), afin de vérifier que la première et deuxième signatures comprennent la partie supplémentaire (T$_3$).

**8.** Procédé cryptographique selon la revendication 6 ou 7, dans lequel l'entité vérificatrice (D) est apte à fournir un service à l'entité utilisatrice (U$_i$) si l'entité vérificatrice (D) authentifie l'entité utilisatrice (U$_i$), et dans lequel l'entité identificatrice (O) est apte à facturer ce service à l'entité utilisatrice (U$_i$), **caractérisé en ce que** la première partie ($\alpha$) indique un service requis par l'entité utilisatrice (U$_i$) et la donnée de substitution (C) indique un niveau de facturation lié au service requis.

**9.** Procédé cryptographique selon l'une des revendications précédentes, **caractérisé par** une étape préliminaire d'enregistrement (120) de l'entité utilisatrice (U$_i$) auprès d'une entité de gestion (M) dans laquelle l'entité utilisatrice (U$_i$) obtient au moins un élément (Ci) de l'entité de gestion (M), ledit élément étant utilisé pour générer la première signature ($\sigma$).

**10.** Procédé cryptographique selon la revendication 9, **caractérisé en ce que** ledit élément est un certificat (Ci) généré par l'entité de gestion (M) en fonction d'un nombre aléatoire (xi) généré par l'entité utilisatrice (U$_i$).

**11.** Procédé cryptographique selon la revendication 10, **caractérisé en ce que** l'entité de gestion (M) fournit le certificat (C$_i$) à l'entité identificatrice (O) et **en ce que** l'identification (160) de l'entité utilisatrice (U$_i$) est faite au moyen d'une partie (A$_i$) au moins du certificat (C$_i$), d'une clé secrète (x$_i$) propre à l'entité identificatrice et d'au moins une partie de la deuxième signature ($\sigma$').

**12.** Système cryptographique pour l'authentification et l'identification séparées d'une entité utilisatrice (U$_i$) comprenant au moins une entité utilisatrice (U$_i$) et une entité vérificatrice (D) et une entité identificatrice (O), le système étant apte à mettre en œuvre un procédé cryptographique selon l'une des revendications 1 à 11.

**13.** Système cryptographique pour l'authentification et l'identification séparée d'une entité utilisatrice (U$_i$) selon la revendication 12, **caractérisé en ce qu'**il comprend en outre une entité de gestion (M) et **en ce qu'**il est apte à mettre en œuvre un procédé cryptographique selon l'une des revendications 9 à 11.

**Patentansprüche**

**1.** Kryptographisches Verfahren zur anonymen Authentifizierung und zur Identifizierung einer Benutzereinheit (U$_i$) durch eine Verifizierungseinheit (D) bzw. eine Identifizierungseinheit (O), **dadurch gekennzeichnet, dass**:

- die Verifizierungseinheit (D) von der Benutzereinheit (U$_i$) wenigstens eine erste Signatur ($\sigma$), die aus einer Gruppensignatur erzeugt wurde, und eine erste Nachricht (m) empfängt (130) und die erste Signatur ($\sigma$) mittels der ersten Nachricht (m) verifiziert (140), um die Benutzereinheit zu authentifizieren; und **dadurch gekennzeichnet, dass**
- die Identifizierungseinheit (O) von der Verifizierungseinheit (D) eine zweite Signatur ($\sigma$') empfängt (150), die mit der ersten Signatur ($\sigma$) zusammenhängt, und die Benutzereinheit mittels der zweiten Signatur und eines geheimen Schlüssels (x), welcher der Identifizierungseinheit (O) eigen ist, identifiziert (160);

wobei die erste Nachricht (m) aus einem ersten Teil $\alpha$ und zwei Teilen $m_d$ und $m_f$ gemäß $m = m_d \parallel \alpha \parallel m_f$ besteht, wobei $\parallel$ eine Verkettung bezeichnet;

wobei die Verifizierungseinheit (D) die zweite Signatur ($\sigma'$) aus der ersten Signatur ($\sigma$) in Abhängigkeit von wenigstens dem ersten Teil (a) der empfangenen ersten Nachricht (m) und von einem geheimen Schlüssel (chsk) einer Chamäleon-Hashfunktion erzeugt (251);

wobei die Verifizierungseinheit (D) eine zweite Nachricht (m') aus der ersten Nachricht (m) erzeugt (251), indem sie den ersten Teil ($\alpha$) der ersten Nachricht durch ein Substitutions-Datenelement (C) ersetzt, und die zweite Nachricht (m') an die Identifizierungseinheit (O) sendet (253) .

2.  Kryptographisches Verfahren nach Anspruch 1, wobei die Verifizierungseinheit (D) dafür ausgelegt ist, für die Benutzereinheit ($U_i$) einen Dienst zu erbringen, falls die Verifizierungseinheit (D) die Benutzereinheit ($U_i$) authentifiziert, und wobei die Identifizierungseinheit (O) dafür ausgelegt ist, der Benutzereinheit ($U_i$) diesen Dienst in Rechnung zu stellen, **dadurch gekennzeichnet, dass** der erste Teil ($\alpha$) einen von der Benutzereinheit ($U_i$) angeforderten Dienst angibt und das Substitutions-Datenelement einen Teil (C) umfasst, der eine mit dem angeforderten Dienst verbundene Fakturierungsebene angibt.

3.  Kryptographisches Verfahren zur anonymen Authentifizierung und zur Identifizierung einer Benutzereinheit ($U_i$) durch eine Verifizierungseinheit (D) bzw. eine Identifizierungseinheit (O), **dadurch gekennzeichnet, dass**:

    - die Verifizierungseinheit (D) von der Benutzereinheit ($U_i$) wenigstens eine erste Signatur ($\sigma$), die aus einer Gruppensignatur erzeugt wurde, und eine erste Nachricht (m) empfängt (130) und die erste Signatur ($\sigma$) mittels der ersten Nachricht (m) verifiziert (140), um die Benutzereinheit zu authentifizieren; und **dadurch gekennzeichnet, dass**
    - die Identifizierungseinheit (O) von der Verifizierungseinheit (D) eine zweite Signatur ($\sigma'$) empfängt (150), die mit der ersten Signatur ($\sigma$) zusammenhängt, und die Benutzereinheit mittels der zweiten Signatur und eines geheimen Schlüssels (x), welcher der Identifizierungseinheit (O) eigen ist, identifiziert (160);

    wobei die erste Nachricht (m) aus wenigstens einem ersten Teil $\alpha$, einem zweiten Teil C und zwei Teilen $m_d$ und $m_f$ gemäß $m = m_d \parallel \alpha \parallel C \parallel m_f$ besteht, wobei $\parallel$ eine Verkettung bezeichnet;

    wobei die Verifizierungseinheit (D) die zweite Signatur ($\sigma'$) aus der ersten Signatur ($\sigma$) in Abhängigkeit von wenigstens dem ersten Teil ($\alpha$) der empfangenen ersten Nachricht (m) und von einem öffentlichen Schlüssel (chpk) einer Chamäleon-Hashfunktion erzeugt (351);

    wobei die Verifizierungseinheit (D) eine zweite Nachricht (m') aus der ersten Nachricht (m) erzeugt (251, 351), indem sie den ersten Teil ($\alpha$) der ersten Nachricht durch ein Substitutions-Datenelement ($\beta$) ersetzt, und die zweite Nachricht (m') an die Identifizierungseinheit (O) sendet (253) .

4.  Kryptographisches Verfahren nach Anspruch 3, wobei die Verifizierungseinheit (D) dafür ausgelegt ist, für die Benutzereinheit ($U_i$) einen Dienst zu erbringen, falls die Verifizierungseinheit (D) die Benutzereinheit ($U_i$) authentifiziert, und wobei die Identifizierungseinheit (O) dafür ausgelegt ist, der Benutzereinheit ($U_i$) diesen Dienst in Rechnung zu stellen, **dadurch gekennzeichnet, dass** der erste Teil ($\alpha$) einen von der Benutzereinheit ($U_i$) angeforderten Dienst angibt und der zweite Teil (C) der ersten Nachricht die mit dem angeforderten Dienst verbundene Fakturierungsebene angibt, und dadurch, dass das Substitutions-Datenelement ($\beta$) der ersten Nachricht von der Benutzereinheit ($U_i$) an die Verifizierungseinheit (D) gesendet wird.

5.  Kryptographisches Verfahren nach einem der Ansprüche 1 bis 4, **dadurch gekennzeichnet, dass** es, in der Identifizierungseinheit (O), die Verifizierung (261, 361) der zweiten Signatur ($\sigma'$) mittels der zweiten Nachricht (m') umfasst.

6.  Kryptographisches Verfahren zur anonymen Authentifizierung und zur Identifizierung einer Benutzereinheit ($U_i$) durch eine Verifizierungseinheit (D) bzw. eine Identifizierungseinheit (O), **dadurch gekennzeichnet, dass**:

    - die Verifizierungseinheit (D) von der Benutzereinheit ($U_i$) wenigstens eine erste Signatur ($\sigma$), die aus einer Gruppensignatur erzeugt wurde, und eine erste Nachricht (m) empfängt (130) und die erste Signatur ($\sigma$) mittels der ersten Nachricht (m) verifiziert (140), um die Benutzereinheit zu authentifizieren; und **dadurch gekennzeichnet, dass**
    - die Identifizierungseinheit (O) von der Verifizierungseinheit (D) eine zweite Signatur ($\sigma'$) empfängt (150), die

mit der ersten Signatur ($\sigma$) zusammenhängt, und die Benutzereinheit mittels der zweiten Signatur und eines geheimen Schlüssels (x), welcher der Identifizierungseinheit (O) eigen ist, identifiziert (160);

wobei die erste Nachricht (m) aus wenigstens einem ersten Teil $\alpha$ und zwei Teilen $m_d$ und $m_f$ gemäß $m = m_d \parallel \alpha \parallel m_f$ besteht, wobei $\parallel$ eine Verkettung bezeichnet;

wobei in der Benutzereinheit ($U_i$) die erste Signatur ($\sigma$) in Abhängigkeit von der ersten Nachricht (m) erzeugt wird (433) und die zweite Signatur ($\sigma$') in Abhängigkeit von einer zweiten Nachricht (m') und von einem öffentlichen Schlüssel (chpk) einer Chamäleon-Hashfunktion erzeugt wird (433);

wobei die zweite Nachricht (m') der ersten Nachricht (m) entspricht, in welcher der erste Teil ($\alpha$) durch ein Substitutions-Datenelement (C) ersetzt worden ist.

7. Kryptographisches Verfahren nach Anspruch 6, wobei die zweite Signatur ($\sigma$') wenigstens einen zusätzlichen Teil ($T_3$) umfasst, der in der ersten Signatur ($\sigma$) enthalten ist, **dadurch gekennzeichnet, dass** es einen Schritt (441) der Verifizierung, in der Verifizierungseinheit (D), umfasst, um zu verifizieren, dass die erste und die zweite Signatur den zusätzlichen Teil ($T_3$) umfassen.

8. Kryptographisches Verfahren nach Anspruch 6 oder 7, wobei die Verifizierungseinheit (D) dafür ausgelegt ist, für die Benutzereinheit ($U_i$) einen Dienst zu erbringen, falls die Verifizierungseinheit (D) die Benutzereinheit ($U_i$) authentifiziert, und wobei die Identifizierungseinheit (O) dafür ausgelegt ist, der Benutzereinheit ($U_i$) diesen Dienst in Rechnung zu stellen, **dadurch gekennzeichnet, dass** der erste Teil ($\alpha$) einen von der Benutzereinheit ($U_i$) angeforderten Dienst angibt und das Substitutions-Datenelement (C) eine mit dem angeforderten Dienst verbundene Fakturierungsebene angibt.

9. Kryptographisches Verfahren nach einem der vorhergehenden Ansprüche, **gekennzeichnet durch** einen vorausgehenden Schritt der Registrierung (120) der Benutzereinheit ($U_i$) bei einer Verwaltungseinheit (M), in welchem die Benutzereinheit ($U_i$) wenigstens ein Element (Ci) von der Verwaltungseinheit (M) erhält, wobei dieses Element verwendet wird, um die erste Signatur ($\sigma$) zu erzeugen.

10. Kryptographisches Verfahren nach Anspruch 9, **dadurch gekennzeichnet, dass** das Element ein Zertifikat (Ci) ist, das von der Verwaltungseinheit (M) in Abhängigkeit von einer Zufallszahl (xi) erzeugt wird, die von der Benutzereinheit ($U_i$) generiert wird.

11. Kryptographisches Verfahren nach Anspruch 10, **dadurch gekennzeichnet, dass** die Verwaltungseinheit (M) das Zertifikat ($C_i$) an die Identifizierungseinheit (O) liefert, und dadurch, dass die Identifizierung (160) der Benutzereinheit ($U_i$) mittels wenigstens eines Teils ($A_i$) des Zertifikats ($C_i$), eines geheimen Schlüssels ($x_i$), welcher der Identifizierungseinheit eigen ist, und wenigstens eines Teils der zweiten Signatur ($\sigma$') erfolgt.

12. Kryptographisches System zur separaten Authentifizierung und Identifizierung einer Benutzereinheit ($U_i$), welches wenigstens eine Benutzereinheit ($U_i$) und eine Verifizierungseinheit (D) und eine Identifizierungseinheit (O) umfasst, wobei das System dafür ausgelegt ist, ein kryptographisches Verfahren nach einem der Ansprüche 1 bis 11 durchzuführen.

13. Kryptographisches System zur Authentifizierung und separaten Identifizierung einer Benutzereinheit ($U_i$) nach Anspruch 12, **dadurch gekennzeichnet, dass** es außerdem eine Verwaltungseinheit (M) umfasst, und dadurch, dass es dafür ausgelegt ist, ein kryptographisches Verfahren nach einem der Ansprüche 9 bis 11 durchzuführen.

## Claims

1. Cryptographic method for anonymous authentication and identification of a user entity ($U_i$) respectively by a checking entity (D) and an identifying entity (O), **characterized in that**:

   - the checking entity (D) receives (130) from the user entity ($U_i$) at least a first signature ($\sigma$) generated from a group signature and a first message (m) and checks (140) the first signature ($\sigma$) by means of the first message (m) in order to authenticate the user entity; and **characterized in that**,
   - the identifying entity (O) receives (150) from the checking entity (D) a second signature ($\sigma$') linked to the first signature ($\sigma$) and identifies (160) the user entity by means of the second signature and of a secret key (x) specific to the identifying entity (O);

wherein the first message (m) is subdivided into a first part $\alpha$ and two parts $m_d$ and $m_f$ as a function of $m = m_d \|\alpha\| m_f$, in which $\|$ represents a concatenation;

wherein the checking entity (D) generates (251) the second signature ($\sigma'$) from the first signature ($\sigma$) as a function of at least the first part ($\alpha$) of the first message (m) received and of a secret key (chsk) of a chameleon hash function; wherein the checking entity (D) generates (251) a second message (m') from the first message (m), by replacing the first part ($\alpha$) of the first message with a substitute datum (C), and sends (253) the second message (m') to the identifying entity (O).

2. Cryptographic method according to Claim 1, wherein the checking entity (D) is capable of supplying a service to the user entity ($U_i$) if the checking entity (D) authenticates the user entity ($U_i$), and wherein the identifying entity (O) is capable of billing this service to the user entity ($U_i$), **characterized in that** the first part ($\alpha$) indicates a service requested by the user entity ($U_i$) and the substitute datum comprises a part (C) indicating a billing level linked to the requested service.

3. Cryptographic method for anonymous authentication and identification of a user entity ($U_i$) respectively by a checking entity (D) and an identifying entity (O), **characterized in that**:

   - the checking entity (D) receives (130) from the user entity ($U_i$) at least a first signature ($\sigma$) generated from a group signature and a first message (m) and checks (140) the first signature ($\sigma$) by means of the first message (m) in order to authenticate the user entity; and **characterized in that**,
   - the identifying entity (O) receives (150) from the checking entity (D) a second signature ($\sigma'$) linked to the first signature ($\sigma$) and identifies (160) the user entity by means of the second signature and of a secret key (x) specific to the identifying entity (O);

   wherein the first message (m) is subdivided into at least a first part $\alpha$, a second part C and two parts $m_d$ and $m_f$ as a function of $m = m_d \|\alpha\| C \| m_f$ in which $\|$ represents a concatenation;
   wherein the checking entity (D) generates (351) the second signature ($\sigma'$) from the first signature ($\sigma$) as a function of at least the first part ($\alpha$) of the first message (m) received and at least one public key (chpk) of a chameleon hash function; wherein the checking entity (D) generates (251, 351) a second message (m') from the first message (m), by replacing the first part ($\alpha$) of the first message with a substitute datum ($\beta$), and sends (253) the second message (m') to the identifying entity (O).

4. Cryptographic method according to Claim 3, wherein the checking entity (D) is capable of supplying a service to the user entity ($U_i$) if the checking entity (D) authenticates the user entity ($U_i$), and wherein the identifying entity (O) is capable of billing this service to the user entity ($U_i$), **characterized in that** the first part ($\alpha$) indicates a service requested by the user entity ($U_i$), the second part (C) of the first message indicates the billing level linked to the requested service, and **in that** the substitute datum ($\beta$) of the first message is sent by the user entity ($U_i$) to the checking entity (D).

5. Cryptographic method according to one of Claims 1 to 4, **characterized in that** it comprises, in the identifying entity (O), the checking (261, 361) of the second signature ($\sigma'$) by means of the second message (m').

6. Cryptographic method for anonymous authentication and identification of a user entity ($U_i$) respectively by a checking entity (D) and an identifying entity (O), **characterized in that**:

   - the checking entity (D) receives (130) from the user entity ($U_i$) at least a first signature ($\sigma$) generated from a group signature and a first message (m) and checks (140) the first signature ($\sigma$) by means of the first message (m) in order to authenticate the user entity; and **characterized in that**,
   - the identifying entity (O) receives (150) from the checking entity (D) a second signature ($\sigma'$) linked to the first signature ($\sigma$) and identifies (160) the user entity by means of the second signature and of a secret key (x) specific to the identifying entity (O),

   wherein the first message (m) is subdivided into at least a first part $\alpha$ and two parts $m_d$ and $m_f$ as a function of $m = m_d \|\alpha\| m_f$, in which $\|$ represents a concatenation;
   in the user entity ($U_i$), the first signature ($\sigma$) is generated (433) as a function of the first message (m) and the second signature ($\sigma'$) is generated (433) as a function of a second message (m') and a public key (chpk) of a chameleon hash function; said second message (m') corresponding to the first message (m) in which the first part ($\alpha$) has been replaced by a substitute datum (C).

7. Cryptographic method according to Claim 6, wherein the second signature ($\sigma'$) comprises at least one additional part ($T_3$) contained in the first signature ($\sigma$), **characterized in that** it comprises a checking step (441), in the checking entity (D), in order to check that the first and second signatures include the additional part ($T_3$).

8. Cryptographic method according to Claim 6 or 7, wherein the checking entity (D) is capable of supplying a service to the user entity ($U_i$) if the checking entity (D) authenticates the user entity ($U_i$), and wherein the identifying entity (O) is capable of billing this service to the user entity ($U_i$), **characterized in that** the first part ($\alpha$) indicates a service requested by the user entity ($U_i$) and the substitute datum (C) indicates a billing level linked to the requested service.

9. Cryptographic method according to one of the preceding claims, **characterized by** a preliminary step of registration (120) of the user entity ($U_i$) with a management entity (M) wherein the user entity ($U_i$) obtains at least one element (Ci) of the management entity (M), said element being used to generate the first signature ($\sigma$).

10. Cryptographic method according to Claim 9, **characterized in that** said element is a certificate (Ci) generated by the management entity (M) as a function of a random number (xi) generated by the user entity ($U_i$).

11. Cryptographic method according to Claim 10, **characterized in that** the management entity (M) supplies the certificate ($C_i$) to the identifying entity (O) and **in that** the identification (160) of the user entity ($U_i$) is done by means of a part ($A_i$) at least of the certificate ($C_i$), of a secret key ($x_i$) specific to the identifying entity and of at least a part of the second signature ($\sigma'$).

12. Cryptographic system for the separate authentication and identification of a user entity ($U_i$) comprising at least one user entity ($U_i$) and one checking entity (D) and one identifying entity (O), the system being capable of implementing a cryptographic method according to one of Claims 1 to 11.

13. Cryptographic system for the authentication and the separate identification of a user entity ($U_i$) according to Claim 12, **characterized in that** it also comprises a management entity (M) and **in that** it is capable of implementing a cryptographic method according to one of Claims 9 to 11.

FIG. 1

FIG. 2

210 — INIT PARAM — 211

GEN pk$_G$ — 213

GEN chpk — 215

220 — JOIN U$_i$ ← $\frac{}{C_i}$ M

230 — PREP m — 231

GEN σ= (sg, ρ) — 233

U$_i$ $\xrightarrow{\sigma, m}$ D — 235

240 — m ⟶ m' — 241

VERIF (sg) — 243

250 — σ ⟶ σ'=(sg,ρ') — 251

D $\xrightarrow{(\sigma', m')}$ O — 253

260 — VERIF (σ',m') — 261

IDENTIF U$_i$ — 263

# FIG. 3A

FIG. 3B

FIG. 4A

**FIG. 4B**

410 ⟋ ┌─────────────────────┐
       │  ┌──────────────┐   │ ⟋ 411
       │  │  INIT PARAM  │   │
       │  └──────────────┘   │
       │         ↓           │
       │  ┌──────────────┐   │ ⟋ 413
       │  │  GEN $pk_G$  │   │
       │  └──────────────┘   │
       └─────────────────────┘
                ↓
       ┌─────────────────────┐ ⟋ 420
       │  JOIN  $U_i$ ← M    │
       │           $C_i$     │
       └─────────────────────┘
                ↓
430 ⟋ ┌──────────────────────────┐
       │  ┌──────────────┐        │ ⟋ 431
       │  │  PREP m, m'  │        │
       │  └──────────────┘        │
       │         ↓                │
       │ ┌──────────────────────┐ │ ⟋ 433
       │ │ GEN $\sigma = (sg,\rho) \mid \sigma' = (sg,\rho')$ │ │
       │ └──────────────────────┘ │
       │         ↓                │
       │ ┌──────────────────────┐ │ ⟋ 435
       │ │      $(\sigma,m)$ $(\sigma',m')$ │ │
       │ │ $U_i$ ─────────────→ D │ │
       │ └──────────────────────┘ │
       └──────────────────────────┘
                ↓
440 ⟋ ┌──────────────────────────┐
       │ ┌──────────────────────┐ │ ⟋ 441
       │ │ VERIF $U_i(\sigma)=U_i(\sigma')$ │ │
       │ └──────────────────────┘ │
       │         ↓                │
       │  ┌──────────────┐        │ ⟋ 443
       │  │  VERIF (sg)  │        │
       │  └──────────────┘        │
       └──────────────────────────┘
                ↓
       ┌─────────────────────┐ ⟋ 450
       │        $(\sigma',m')$ │
       │  D ───────────→ O   │
       └─────────────────────┘
                ↓
460 ⟋ ┌──────────────────────────┐
       │ ┌──────────────────────┐ │ ⟋ 461
       │ │  VERIF $(\sigma',m')$ │ │
       │ └──────────────────────┘ │
       │         ↓                │
       │  ┌──────────────┐        │ ⟋ 463
       │  │  IDENTIF $U_i$ │      │
       │  └──────────────┘        │
       └──────────────────────────┘

# FIG. 5A

M

$C_i = \{A_i, e_i\}$

$U_i$
$(x_i)$

$m = m_d \| \alpha \| m_f, \ \sigma = sg$

$m' = m_d \| C \| m_f, \ \sigma' = sg'$

D

$pk_G$

$\sigma' = sg'$

$m' = m_d \| C \| m_f$

O
$(x)$

FIG. 5B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1808795 A2

- WO 2008149029 A2

**Littérature non-brevet citée dans la description**

- Trapdoor Sanitizable Signatures and Their Application to Content Protection. **S. CANARD et al.** Applied Cryptography and Network Security. Springer
- Security of Sanitizable Signatures Revisited. **C. BRZUSKA et al.** Public Key Cryptography. Springer

- Chameleon Hashing Without Key Exposure. **X. CHEN et al.** Lecture notes in computer science. Springer
- An efficient CDH-Based Signature Scheme with a Tight Security Réduction. **BENOÎT CHEVALLIER ; MAMES ED ; VICTOR SHOUP.** Advances in Cryptology - Crypto 2005 Lectures notes in computer science. Springer